# EUROPÄISCHE PATENTSCHRIFT

(11) **EP 1 518 631 B1**
(45) Veröffentlichungstag und Bekanntmachung des Hinweises auf die Patenterteilung: **01.12.2010**
(21) Anmeldenummer: 04022874.4
(22) Anmeldetag: 24.09.2004
(51) Int. Cl.: B23K 11/30, B23B 5/16

(54) **Verfahren zur Formgebung und/oder zum mechanischen Entfernen von Ablagerungen, insbesondere von Ablagerungen an Schweisselektroden für das Widerstandsschweissen**
Method for reshaping and/or removing deposits, in particular from resistance welding electrodes
Méthode pour le reformage et/ou l'enlèvement de dépôts, en particulier pour les électrodes de soudage par résistance.

(30) Priorität: 24.09.2003 DE 10344481
(43) Veröffentlichungstag der Anmeldung: 30.03.2005
(73) Patentinhaber: Koch, Walter, 26817 Rhauderfehn (DE)
(72) Erfinder: Koch, Walter, 59439 Holzwickede (DE); Leiteritz, Olaf, 52399 Merzenich (DE)
(74) Vertreter: Schneider, Uwe

(56) Entgegenhaltungen:
- DE-U- 29 607 927
- PATENT ABSTRACTS OF JAPAN Bd. 2003, Nr. 12, 5. Dezember 2003 (2003-12-05) & JP 2003 245779 A (TOYOTA AUTO BODY CO LTD), 2. September 2003 (2003-09-02)

## Beschreibung

Die Erfindung betrifft ein Verfahren zum mechanischen Entfernen von Ablagerungen, insbesondere von Ablagerungen an Schweißelektroden für das Widerstandsschweißen gemäß Oberbegriff des Anspruches 1.

Widerstandsschweißungen werden in einer Vielzahl von Anwendungen im Bereich der Fertigungstechnik eingesetzt und dienen üblicherweise dazu, dünnwandige Metallteile oder dergleichen wie etwa Blechteile miteinander zu verbinden. Hierfür werden von Hand oder etwa auch von mechanisierten oder automatisierten Einrichtungen wie beispielsweise Schweißrobotem entsprechende Schweißzangen an die Verbindungsstellen der Werkstücke heran gebracht und dort so miteinander auf Kontakt gefahren, daß die Werkstücke zu mindestens punktförmig aufeinander liegen. Durch den über die Schweißzangen auf die Werkstücke aufgebrachte Schweißstrom wird das Material des Werkstückes punktuell sehr stark erhitzt und verschweißt bleibend miteinander.

Durch das Schweißverfahren kommt es unweigerlich dazu, daß die Schweißzangen im Bereich der Berührung mit den Werkstücken im Laufe der Zeit eine Veränderung erfahren, und zwar eine Veränderung sowohl der Form als auch der Materialeigenschaften. Üblicherweise werden für derartige Schweißzangen im Bereich der Berührung mit dem Werkstück Materialien aus Kupfer und Kupferlegierungen benutzt, die beim Schweißen einem sogenannten Abbrand, also einer Abtragung von Material der Schweißzangen im Bereich der Berührung mit dem Werkstück unterliegen. Ebenfalls werden die Oberflächen der Schweißzangen im Bereich der Berührung mit dem Werkstück sich dadurch verändern, daß Material aus den Werkstücken oder durch die Verschweißung entstehender Rückstände wie etwa Schlacken oder dergleichen sich dort anlagern und auch dadurch die Geometrie der entsprechenden Oberflächen der Schweißzangen verändern. Derartige Ablagerungen, die beim Schweißen entstehen und sich an der Schweißelektrode vornehmlich im Berührungsbereich ablagern, müssen aber periodisch entfernt werden. Denn für die Erzielung qualitativ hochwertiger Schweißpunkte ist es wichtig, daß die Schweißelektroden besonders in ihrem Kontaktbereich, der mit dem zu schweißenden Werkstück in Berührung kommt, plan oder definiert geformt sind.

Im Bereich etwa der Automobiltechnik oder sonstiger Fertigungsbereiche, in denen eine hohe Zahl von Schweißungen in kurzer Zeit durchgeführt werden muß, ist es von zentraler Bedeutung, daß die Schweißzangen in ihrem Kontaktbereich möglichst immer identische Berührung mit den Werkstücken haben und dadurch gleichbleibende Schweißungen ausführen können. Durch die Veränderungen der Schweißzangen in ihrem Kontaktbereich wie vorstehend beschrieben wird aber unweigerlich eine Veränderung der Schweißungen einhergehen, die möglichst zu vermeiden ist. Daher ist es schon seit langem bekannt, anstelle von massiven Schweißzangen aus dem vorstehend genannten Material Schweißzangen zu verwenden, bei denen im Bereich der Berührung mit den Werkstücken sogenannte Kappen aufgesetzt sind, die aus dem genannten Material bestehen und relativ leicht nach Erreichen einer nicht mehr zulässigen Länge bzw. Wandungsdicke ausgetauscht werden können, um die Reproduzierbarkeit, Zuverlässigkeit und Festigkeit der Schweißpunkte zu gewährleisten.

Derartige Kappen sind häufig näpfchenartige Hohlteile, die über einen entsprechenden Konus auf den Träger der Schweißzangen aufgesetzt werden und somit fest mit der Schweißzange, gleichzeitig aber lösbar verbunden sind. Das Wechseln der Kappen ist ein relativ aufwendiger Vorgang, der darüber hinaus mit einer beträchtlichen Stillstandszeit der Schweißanlage einher geht und daher nur dann vorgenommen werden soll, wenn die Kappe nicht mehr innerhalb des zulässigen Toleranzbereichs liegt. Zur Vermeidung dieser übermäßigen Stillstandszeiten ist es bekannt, die Kappen statt sie auszuwechseln einer formgebenden Bearbeitung zu unterziehen, bei der die den Werkstücken nahen Bereiche der Kappe ähnlich wie bei einem Anspitzer eines Bleistiftes spanend nachbearbeitet werden und daher nach dieser Bearbeitung wieder die Toleranzen hinsichtlich der Form und der Oberfläche einhalten. Dieses Nachbearbeiten der Kappen erfolgt üblicherweise mit spanenden Werkzeugen, die durch eine Relativbewegung zwischen der Kappe und dem Werkzeug genau wie beim Anspitzer eines Bleistiftes die Oberfläche der Kappe definiert abtragen und dabei Verunreinigungen beseitigen sowie die Ausgangsgeometrie der Kappe in dem Bereich der Schweißpunkte wieder herstellen. Hierzu ist eine Vielzahl von Werkzeugen bekannt, die durch entsprechende Formgebung oder Zusammenwirken mehrerer entsprechender Werkzeuge die Geometrie der Schweißkappe wieder einstellen. Üblicherweise werden Werkzeuge eingesetzt, die als Schneidplatten mit oder ohne Radiusschneide ausgeführt sind.

Nachteilig an derartigen Einrichtungen ist es, daß mit der Wiederherstellung der Form der Schweißkappe ein deutlicher Verlust an Material der Schweißkappe einher geht, der im Bereich von mehreren Zehntel Millimetern bei jeder Bearbeitung liegt. Durch die Zerspanung geht damit relativ viel Material der Schweißkappe verloren, was dazu führt, daß nach einer relativ geringen Anzahl von Nachbearbeitungen der Schweißkappe der Bereich der Schweißkappe zu kurz wird, der den Schweißpunkten bei der Durchführung der Widerstandsschweißungen zugeordnet ist. Dies ist aber ebenfalls zu vermeiden, da dann ein Austreten von Kühlflüssigkeit erfolgen kann und muß daher sicher verhindert werden. Daher werden üblicherweise die Schweißkappen nach einer Zahl von zirka 5 bis 50 Nachbearbeitungen ausgetauscht, um dieses Austreten von Kühlflüssigkeit sicher vermeiden zu können. Durch dieses zwangsläufige Austauschen ist aber die Wirtschaftlichkeit entsprechender Schweißkappen nicht optimal, da nach dem Austauschen wieder eine neue Schweißkappe zu entsprechenden Kosten nachgerüstet werden muß.

Die geringe Zahl von Nachbearbeitungen der Schweißkappen hängt vor allem mit der Art der Zerspanung zusammen, die heute üblicherweise bei der Nachbearbeitung verwendet wird. Bei diesen spanenden Verfahren mit Schneidelementen werden von einem zu bearbeitenden Werkstück Späne auf mechanischem Wege abgetrennt. Das Abtrennen der Späne vom Werkstück erfolgt durch den in seiner Form eindeutig geometrisch bestimmten Schneidkeil. Im rechtwinkligen Bezugssystem ergeben sich die für den Zerpanungsprozeß wichtigen Werkzeugwinkel, nämlich Freiwinkel und Spanwinkel. Zusammen mit dem zwischen Freiwinkel und Spanwinkel liegenden Keilwinkel ergibt die Summe aller Winkel immer 90°. Die Flächen, über die der Span während des Bearbeitungsprozesses abläuft, werden Spanflächen genannt, diejenigen, die der Spanfläche gegenüber angeordnet sind, nennt man Freiflächen. Die Durchdringung der Ebenen von Span- und Freifläche, also deren gemeinsame Kante, wird aufgrund ihrer Funktion auch Hauptschneide genannt. Mit dieser Hauptschneide wird das Werkstück bearbeitet.

Der Spanwinkel wird bisher in Abhängigkeit von dem zu zerspanenden Werkstoff üblicherweise deutlich positiv gewählt, damit die Rißbildung durch den Schneidkeil in dem zu zerspanenden Material eine leichte Zerspanung mit guter Oberflächenbildung kombiniert. Wird der Spanwinkel zu klein, so ergeben sich unebene und nicht maßhaltige Oberflächen, da die Späne in diesem Fall regelrecht aus dem Werkstoff herausgerissen werden. Man spricht in diesem Fall von einem sogenannten Reißspan. Auch wird hierbei das Antriebsdrehmoment für die Zerspanung sehr hoch. Bei mittlerem Spanwinkel bildet sich ein kurzer voreilender Riß, wodurch der Span in kurzen Stücken abbröckelt und daher nicht zu Wirrspänen führt. Bei zu großem Spanwinkel hingegen bildet sich der unerwünschte Fließspan, der zu Störungen an der Zerspanungseinrichtung führen kann. Negative Spanwinkel werden in aller Regel vermieden, da die Bruchgefahr der Schneidkante zwar geringer ist, gleichzeitig jedoch die Zerspanungsverhältnisse wesentlich ungünstiger sind. Vor allem werden Maschinen mit hoher Antriebsleistung und starrem Aufbau benötigt. Der Spanwinkel bei der spanenden Nachbearbeitung von Schweißkappen beträgt normalerweise deutlich mehr als 1 ° positiv, üblicherweise liegt er im Bereich von 2-4° positiv. Dadurch ist eine entsprechend gute Oberfläche der gereinigten Schweißkappe zu erzielen.

In der Regel werden heute zum spanenden Bearbeiten von Werkstücken aus Metall Wendeschneidplatten in den unterschiedlichsten Formen verwendet. Es handelt sich dabei um drei- oder mehreckige oder auch im Querschnitt runde Schneidelemente, die entweder an einem Ende oder über eine im Schneidelement vorgesehene Bohrung in einer Spanneinrichtung gehalten werden.

Beim Stirn- oder Plandrehen eines Werkstücks kann entweder das zu bearbeitende Werkstück relativ zu dem Werkzeug oder das Werkzeug relativ zu dem Werkstück in Drehung versetzt werden. Dabei wird abhängig vom Material des Werkzeugs und des Werkstücks das Werkzeug in Richtung der Rotationsachse des Werkzeugs zugestellt und zwar solange, bis die gewünschte Länge bzw. Form oder Oberfläche des Werkstücks erreicht ist.

Es ist weiterhin bekannt, Schweißkappen durch Walzverfahren oder Rollierverfahren wie etwa in der DE 101 25 481 C1 angegeben wieder aufzuarbeiten, bei denen die Schweißkappe durch eine spanlose Nachbearbeitung wieder in die ursprüngliche Form gebracht wird. Hierzu wird die Schweißkappe in einen mit Rollen versehenen Formkopf eingebracht, in dem Formwalzen über die den Schweißungen zugeordnete Oberfläche der Schweißkappe unter Druck hinüber rollen und dabei zu einer plastischen Verformung der Oberfläche der Schweißkappe führen. Durch diese plastische Verformung verändert sich zum einen die Form der Schweißkappe und zum anderen platzen Fremdkörper wie Schlackenreste oder dergleichen von dieser Oberfläche wieder ab. Hierbei werden ebenfalls keine übermäßigen Abtragungen von der Schweißkappe verursacht. Nachteilig an diesem Verfahren ist es allerdings, daß sehr hohe Bearbeitungskräfte erforderlich sind und eine vollständige Reinigung der Schweißkappen auch bei längerdauernder rollierender Bearbeitung nicht gewährleistet ist, da die Verunreinigungen auch in die neu geformte Oberfläche der Kappe eingewalzt werden.

Aus der JP 2003 245 779 A ist eine Vorrichtung zum Schleifen der Spitzen von Schweißelektroden bekannt, bei dem im zentralen Bereich der Spitze eine entsprechende Andruckfläche vorhanden ist. In der DE 296 07 927 U1 wird erreicht, dass der zentrale Mittenbereich der Spitze einer Schweißelektrode in einem Durchgang mit den Radienbereichen bearbeitet wird.

Es ist daher Aufgabe der vorliegenden Erfindung, eine zerspanendes Verfahren der gattungsgemäßen Art derart weiter zu entwickeln, daß die Wiederherstellung der Geometrie und der Oberfläche der Schweißkappen sicher gewährleistet ist, ohne daß ein zu hoher Abtrag an der Schweißkappe erfolgen muß und dadurch insgesamt die Wirtschaftlichkeit beim Nachbearbeiten der Schweißkappen wesentlich zu erhöhen.

Die Lösung der erfindungsgemäßen Aufgabe ergibt sich aus den kennzeichnenden Merkmalen des Anspruches 1 in Zusammenwirken mit den Merkmalen des Oberbegriffes. Weitere vorteilhafte Ausgestaltungen der Erfindung ergeben sich aus den Unteransprüchen.

Die Erfindung geht aus von einem Verfahren zur Formgebung und/oder zum mechanischen Entfernen von Ablagerungen an Werkstücken, insbesondere von Ablagerungen an Schweißelektroden für das Widerstandsschweißen, mit Hilfe einer Vorrichtung aufweisend mindestens ein Schneidelement mit einer Hauptschneide, wobei der Hauptschneide mindestens eine Spanfläche und mindestens eine Freifläche zugeordnet sind, die Hauptschneide des Schneidelements jeweils im Bereich der Kante von aneinander angrenzender Spanfläche und Freifläche gebildet ist und Schneidelement und Werkstück eine Relativdrehung zueinander ausführen. Ein derartiges gattungsgemäßes Verfahren wird dadurch weiter gebildet, daß das Schneidelement zumindest im Bereich der Kante an der Hauptschneide einen Bereich aufweist, in dem der Spanwinkel negativ ist und die Relativdrehzahl zwischen Schneidelement und Werkstück beim Entfernen der Ablagerungen im Bereich zwischen 400 und 1500 Umdrehungen je Minute beträgt.

Es hat sich überraschenderweise herausgestellt, daß die Kombination eines negativen Spanwinkels an dem Schneidelement mit einer deutlichen Erhöhung der Drehzahl gegenüber üblicherweise verwendeten (etwa bis 350 U/min) Drehzahlen an bekannten Vorrichtungen in Kombination eine Zerspanung der Werkstück ergibt, die nur zu einem sehr geringen Abtrag etwa beim Reinigen von Schweißkappen führt. Liegt der Abtrag bei bekannten Vorrichtungen üblicherweise im Bereich von mehreren Zehntel Millimetern je Bearbeitung, so ist durch die erfindungsgemäßen Kombination eines negativen Spanwinkels und der deutlichen Drehzahlerhöhung der Abtrag auf wenige Hundertstel Millimeter je Bearbeitung zu reduzieren, wodurch sich ohne Beeinträchtigung der Anforderungen an die Geometrie der Schweißkappen eine wesentliche Verbesserung der Standzeit der Schweißkappen während der Schweißvorganges ergibt und damit die Wirtschaftlichkeit insbesondere bei der Verwendung von Schweißkappen wesentlich verbessert ist. Damit lassen sich derartige Schweißkappen mindestens zehnmal länger benutzen als auf herkömmliche Weise nachgearbeitete Schweißkappen.

Es ist insbesondere überraschend, daß durch die Erhöhung der Drehzahl der Abtrag insgesamt verringert wird, da ansonsten üblicherweise bei positivem Spanwinkel bei Erhöhung der Drehzahl leicht ein Rattern des Werkstückes auftritt und damit sehr unsaubere und wenig maßgerechte Oberflächen entstehen. Überraschenderweise tritt dies bei der erfindungsgemäßen Kombination von im wesentlichen negativen Spanwinkel und in dem angegebenen Drehzahlbereich nicht auf, statt dessen ist eine sehr gute und gleichmäßige, fast polierte Reinigung insbesondere von Schweißkappen festzustellen, ohne daß ein wie bisher benötigter deutlich größerer Abtrag der Schweißkappen im Bereich der Schweißpunkte hierfür erforderlich ist. Sowohl die Maßhaltigkeit der Schweißkappen wird dadurch mit einem nur minimalen Abtrag gewährleistet als auch eine sichere Reinigung der Bodenbereiche der Schweißkappen von Inkrustrationen oder Schlackeresten.

Es hat sich hierbei herausgestellt, daß sich in einem Drehzahlbereich zwischen 400 U/min und 1500 U/min und bevorzugt in einem Drehzahlbereich von 650 U/min und 1300 U/min je nach verwendeter Zusammensetzung der Werkstücke in Kombination mit dem im wesentlichen negativen Spanwinkel optimale Ergebnisse erreichen lassen, wobei sich von selbst versteht, daß je nach Zusammensetzung des Materials der Schweißkappen und der Werkzeuge in diesem Bereich von Drehzahl und Spanwinkel entsprechende Anpassungen erfolgen können. Darüber hinaus laßt sich eine wesentliche Standzeitverlängerung der Werkzeuge für die Nachbearbeitung der Schweißkappen erreichen.

In einer vorteilhaften Ausgestaltung kann die Vorrichtung derart weiter gebildet werden, daß der Spanwinkel des Schneidelementes nur in einem Bereich nahe der Kante an den Hauptschneiden negativ zwischen 0 und 4° gebildet ist. Diese etwa durch in Weiterbildung als Fase ausgebildete Veränderung des Spanwinkels nur direkt im Bereich der Hauptschneiden ist einfach an einer bekannten Ausgestaltung des Schneidelementes anzubringen und erfordert nur geringe Modifikationen eines derartigen Schneidelementes. Hierbei ist es in weiterer Ausgestaltung auch denkbar, daß an den kantennah angeordneten Bereich mit einem im wesentlichen negativ ausgebildeten Spanwinkel in Schnittrichtung ein wie üblich gestalteter Abschnitt der Spanfläche mit einem mit mehr als 4 Grad positiv ausgebildeten Spanwinkel angrenzt, der dann für einen guten Späneabfluß in der schon bekannten Weise bei handelsüblichen Schneidelementen sorgt.

Der Spanwinkel des Schneidelementes kann dabei in einem Bereich nahe der Kante so negativ ausgebildet sein, daß der Spanwinkel sich in einem Bereich zwischen 0 und 45° variieren läßt. Hierbei ist abhängig von den verwendeten Materialien und auch abhängig von der eingestellten Drehzahl eine Variation dieses Spanwinkels denkbar und von der Erfindung mit umfaßt.

In einer weiteren Ausgestaltung der Erfindung hat es sich als vorteilhaft heraus gestellt, wenn die Schneide des Schneidelementes nicht exakt scharfkantig, sondern abgerundet oder angefast oder gebrochen ausgebildet ist. Hierdurch läßt sich eine weitere Verbesserung der Güte der hergestellten Flächen der Schweißkappen erreichen, wobei gleichzeitig der Abtrag weiter minimiert und damit die Lebensdauer der Schweißkappen zusätzlich erhöht wird. Damit wird die Verwendung der erfindungsgemäßen Vorrichtung besonders wirtschaftlich.

Denkbar ist es hierbei, daß die Schneide des Schneidelementes eine kleine Abrundung oder eine kleine Fase, vorzugsweise im Bereich von wenigen hundertstel Millimetern aufweist, die in weiterer Ausgestaltung beispielsweise durch Polieren hergestellt werden kann. Durch eine derartige nur in sehr geringem Maße abtragende Bearbeitung der Schneide des Schneidelementes geht die eigentliche Schneidhaltigkeit des Schneidelementes nicht verloren, gleichzeitig werden aber die Berührungs- und Eingriffsverhältnisse zwischen dem Schneidelement und dem Werkstück in Form der Schweißkappe signifikant insofern verbessert, daß der Abtrag minimiert und die Oberflächengüte erhöht wird.

Eine besonders bevorzugte Ausführungsform des erfindungsgemäßen Verfahren wird an hand der Zeichnung beschrieben.

Es zeigen:
- Figur 1 -: eine perspektivische Ansicht eines ersten Schneidelements für das erfindungsgemäß Verfahren,
- Figur 2a-2c -: Draufsicht, Seitenansicht und Schnitt durch das Schneidelement gemäß Fig. 1,
- Figur 3a―3c -: ein weiteres Schneidelement mit der Gestaltung des Spanwinkels als dreiecksförmige Schneidplatte,
- Figur 4 -: eine vergrößerte Darstellung der geometrischen Verhältnisse am Schneidkeil eines Schneidelementes gemäß Figur 3,
- Figur 5 -: qualitative Meßergebnisse bei der Untersuchung der Abhängigkeit von Drehzahl und Spanwinkel,
- Figur 6 -: Aufbau einer Halte- und Bearbeitungsvorrichtung unter Verwendung gestalteter Schneidelemente für die Nachbearbeitung von Schweißkappen.

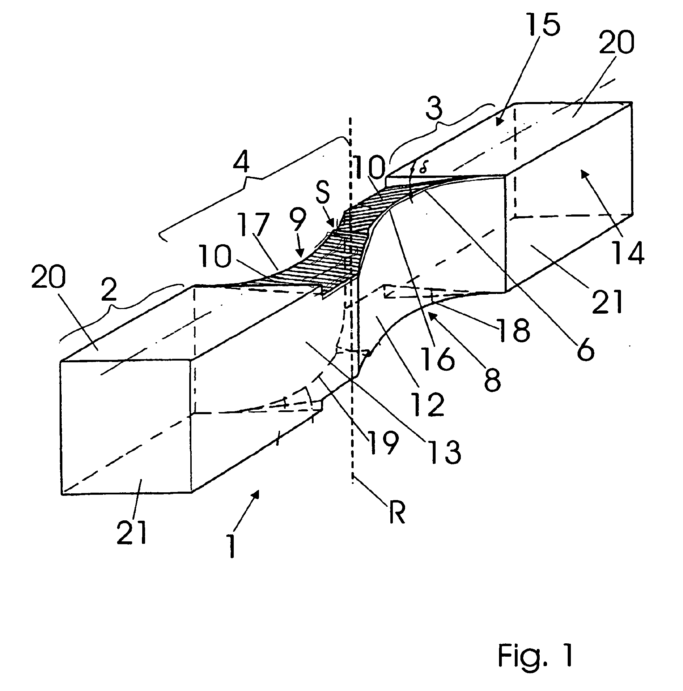

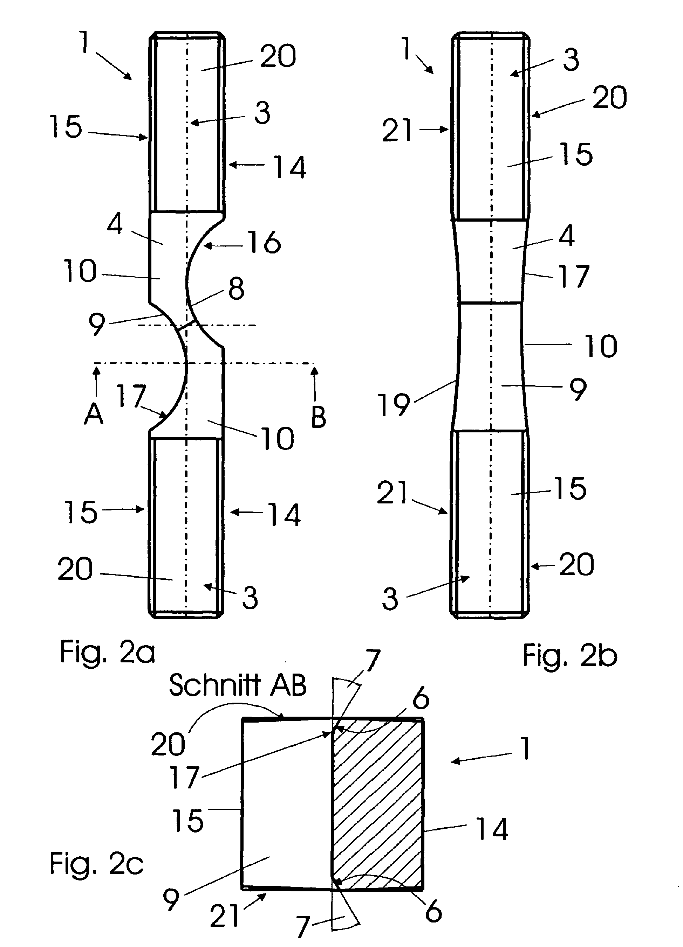

Wie in den Fig. 1-3 dargestellt ist, umfaßt nach einer ersten Ausführungsform das Schneidelement 1 einen Schneidabschnitt 4 und jeweils zu den Seiten des Schneidabschnitts 4 angeordnete Klemmabschnitte 2, 3, wobei das Schneidelement 1 selbst aus einem langgestreckten rechteckigen Profil besteht. Ein derartiges Schneidelement 1 ist grundsätzlich aus der DE 296 07 927 U1 bekannt und soll hier nur soweit beschreiben werden, wie für das Erläutern der hier vorliegenden Erfindung von Wichtigkeit. Der Schneidabschnitt 4 umfaßt insgesamt vier Hauptschneiden 16, 17, 18, 19, wobei jeweils zwei Hauptschneiden 16, 17 und 18, 19 in einer Ebene angeordnet sind. Die Hauptschneiden 16, 17, 18, 19 entstehen an den Kanten einander angrenzender Freiflächen 10 und Spanflächen 12, 13 und liegen in der Ebene der Oberseiten 20, 21 der Klemmabschnitte 2, 3, so daß zwischen den Oberseiten 20, 21 und den Freiflächen 10 Stufen mit stark spitzwinkliger Fläche entstehen.

Die Spanfläche 12, 13 des Schneidelements 1 entsteht durch Herstellen einer im wesentlichen bogenförmigen Ausnehmung 8, 9 in den Seitenflächen 14, 15 des in Fig. 1 dargestellten Schneidelements 1, wobei die Spanfläche 12, 13 der Bogenfläche entspricht. Dabei ist die im wesentlichen bogenförmige Ausnehmung 8, 9 über den ganzen Profilquerschnitt des Schneidabschnitts 4 vorgesehen.

Die Freifläche 10 wird durch Anschleifen der Oberseite 20, 21 hergestellt, wobei eine zulässige Rauhtiefe von max. 0,1 µm nicht überschritten werden sollte.

Vorzugsweise beträgt der Freiwinkel δ, d.h. die Neigung der Freifläche 4°, und zwar ausgehend von der jeweiligen Hauptschneide 16, 17, 18, 19 schräg nach unten geneigt.

Vorzugsweise sind die beiden im wesentlichen bogenförmigen Ausnehmungen 8, 9 versetzt zueinander angeordnet. Dies bedeutet, daß die eine Ausnehmung 8 in der einen Seitenfläche 14 zu der anderen Ausnehmung 9 auf der anderen Seitenfläche 15 so angeordnet ist, daß die Hauptschneiden 16, 17 und 18, 19 vom Mittelpunkt des Schneidelements 1, der gleichzeitig den Schwerpunkt S des Schneidelements 1 bildet, im selben Abstand entfernt sind. Zusätzlich sind die Hauptschneiden 16, 17 zu den Hauptschneiden 17, 18 punktsymmetrisch in Bezug auf den Schwerpunkt S angeordnet.

Um eine selbsttätige Zentrierung des zu bearbeitenden Werkstücks 300 während des Bearbeitungsprozesses zu gewährleisten, sind die Freiflächen 10 so gestaltet, daß deren Schnittpunkt dem Schwerpunkt S des Schneidelements 1 entspricht, wobei vorausgesetzt wird, daß die Rotationsachse R des Schneidelements 1 den Schwerpunkt S senkrecht zu Längserstreckung des Schneidelements 1, also senkrecht zur Oberseite 20, 21 durchdringt.

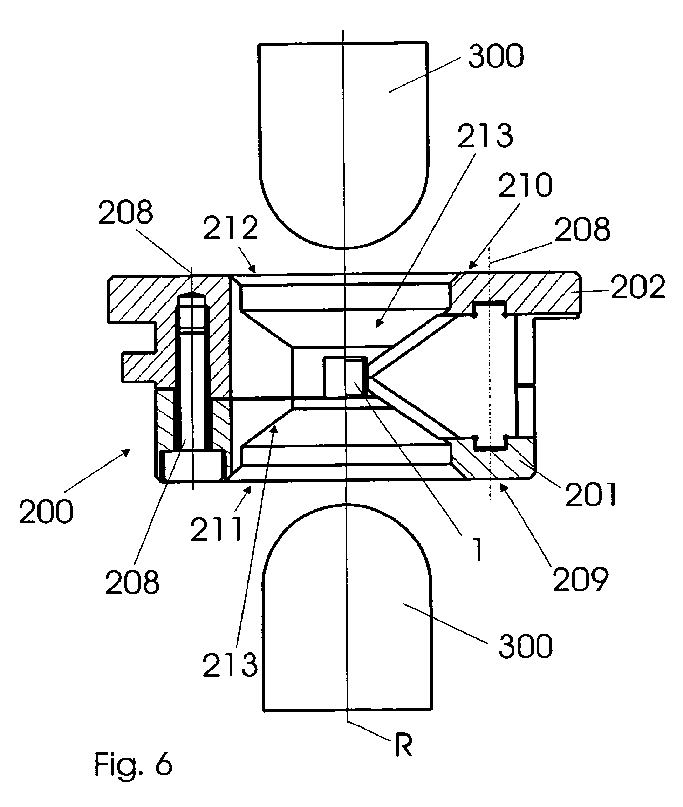

Das Schneidelements 1 eignet sich entweder dafür, zwei Werkstücke 300 wie in Figur 6 gezeigt gleichzeitig, d.h. jeweils mit den Hauptschneiden 16, 17 und 18, 19 zu bearbeiten, oder, falls nur ein Werkstück 300 bearbeitet wird, nach Verschleiß der einen Hauptschneiden 16, 17 das Schneidelement 1 um 180° zu drehen, so daß die weiteren Hauptschneiden 18, 19 zum Einsatz kommen.

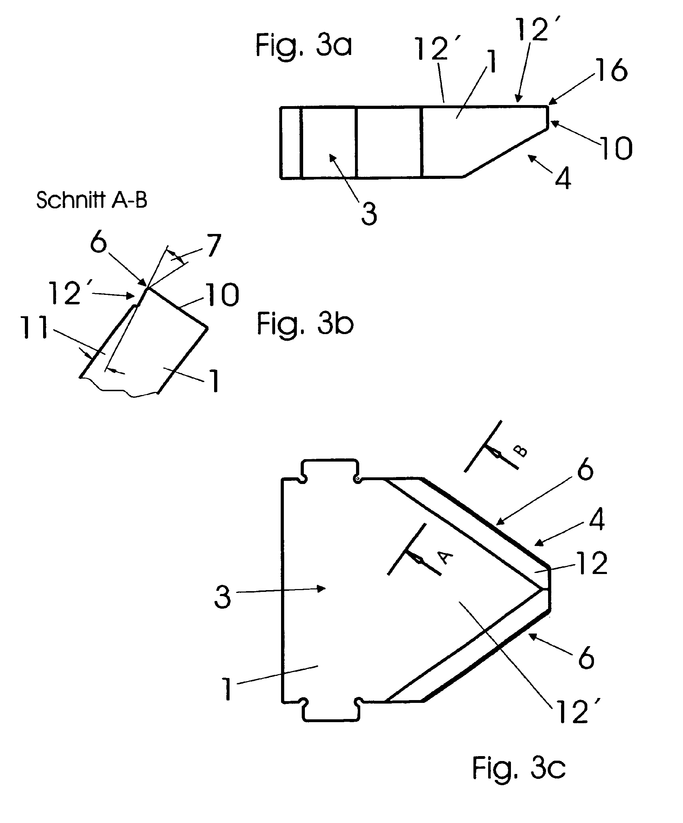

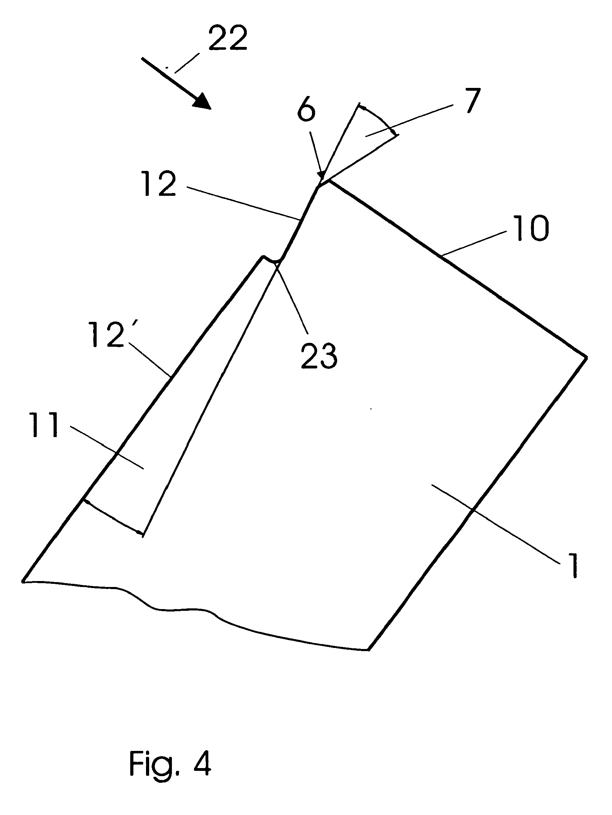

Gegenüber der Gestaltung aus der DE 296 07 927 U1 weist die Vorrichtung zur Durchführung der hier vorliegenden Erfindung im Bereich der Hauptschneiden 16,17 und 18,19 einen Abschnitt 6 mit einem im wesentlichen negativen Spanwinkel 7 auf, der insbesondere aus der Figur 3b und der Vergrößerung in der Figur 4 deutlich erkennbar wird. Dieser Abschnitt 6 mit einem im wesentlichen negativen Spanwinkel 7, der hier in der Figur 1 als eine Art Fase entlang der Hauptschneide 16 dargestellt ist, sorgt nun dafür, daß bei der erfindungsgemäß deutlich gegenüber der bekannten Vorrichtung üblicherweise verwendeten, hier erhöhten Relativdrehzahl der Abtrag von einem etwa als Schweißkappe ausgebildeten Werkstück 300 wesentlich geringer ausfällt als bei den wie üblich mit einem positiven Spanwinkel 11 gestaltete Schneidelement 1. Das mit einem positiven Spanwinkel 11 gestaltete Schneidelement 1 trägt üblicherweise von einer Schweißkappe 300 bei einer Überarbeitung der Schweißkappe 300 Material im Bereich von mehreren Zehntel Millimetern ab, wohingegen das mit dem in Form einer Fase gestalteten Abschnitt 6 versehene Schneidelement von der Schweißkappe 300 Material nur im Bereich von wenigen Hundertstel Millimetern abträgt. Hierbei ist überraschend, daß insbesondere bei der höheren Drehzahl der Relativdrehung 22 zwischen Schneidelement 1 und Schweißkappe 300 kein Rattern des Werkzeuges 300 auftritt und gleichwohl eine sehr gute Reinigungswirkung der Schweißkappe 300 und eine Einstellung der gewünschten Geometrie erfolgt.

Wie insbesondere an der Figur 4 noch deutlicher zu erkennen ist, kann die Ausgestaltung der Spanfläche 12 mit einem Abschnitt 6 mit negativen Spanwinkel 7 mit der ansonsten üblichen Ausgestaltung der Spanfläche 12' mit einem positiven Spanwinkel 11 kombiniert werden, wobei am Ende der Spanfläche 12' ein Spanbrecher 23 in grundsätzlich bekannter Weise angebracht sein kann und die beiden Spanflächenabschnitte 12, 12'aneinander grenzen.

Die Figur 4 stellt die geometrischen Verhältnisse an einem Schneidelement 1' dar, das in den Figuren 3a bis 3c genauer dargestellt ist. Dieses Schneidelement 1' besteht aus einer einseitig in einem Klemmabschnitt 3 geklemmten, im wesentlichen dreiecksförmigen Platte grundsätzlich bekannten Aufbaus, die auch bei schon bekannten Vorrichtungen der gattungsgemäßen Art verwendet wurde. Daher soll dieses Schneidelement 1 ' hier nur soweit erläutert werden, wie dies für das Verständnis der geometrischen Verhältnisse an der Spanfläche 12' von Notwendigkeit ist. Die Figur 3b ist hierbei eine verkleinerte Darstellung der in der Figur 4 vergrößert dargestellten geometrischen Verhältnisse.

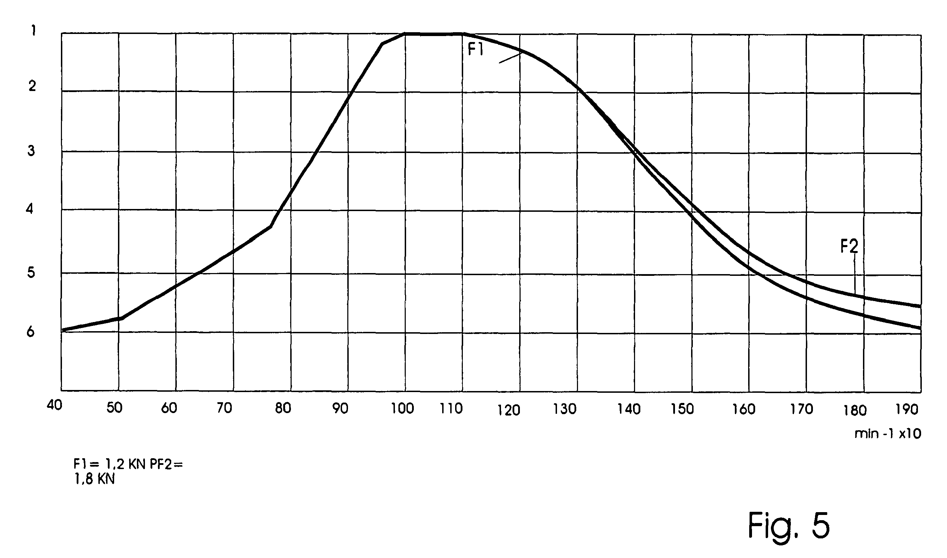

Wie sich bei Untersuchungen mit einem zur Durchführung der Erfindung gestalteten Schneidelement 1 herausgestellt hat, liegt ein Optimum der Relativdrehzahl zwischen Werkstück 300 und Schneidelement 1 im Bereich von etwa 1000 U/min, wie dies aus den Fig. 5 qualitativ zu entnehmen ist. Hierbei ist die Drehzahl über der Qualität der erfolgten Nachbearbeitung aufgetragen, wobei die beste Qualität im Bereich von etwa 1000 U/min auftritt. Wie man weiterhin erkennen kann, ist die Qualität bei höheren als der optimalen Geschwindigkeit zum weiteren noch von der Anpreßkraft abhängig.

Die in der Figur 6 dargestellte Spanneinrichtung 200 selbst ist vorzugsweise Bestandteil einer Vorrichtung zum Zerspanen von Werkstücken 300 und insbesondere von Schweißkappen aus Metall. Die Spanneinrichtung 200 mit dem neuen Schneidelement 1 läßt sich besonders vorteilhaft in eine Vorrichtung zum mechanischen Entfernen von Ablagerungen an Schweißelektroden 300 einsetzbar, wie sie in der DE-GM 94 14 151.7 beschrieben ist. Hierbei nimmt die Spanneinrichtung 200 das oder die Schneidelemente 1 auf und versetzt diese Schneidelemente 1 relativ zum Werkstück 300 in grundsätzlich bekannter Weise in eine Drehbewegung.

Zur Bearbeitung eines Werkstücks 300 (vgl. Fig. 6) ist es erforderlich, daß das Schneidelement 1 in einer Spanneinrichtung 200, wie sie in der Figur 9 gezeigt ist, positionsgerecht gehalten wird. Diese Spanneinrichtung 200 eignet sich zum Einsetzen in eine Vorrichtung, die einen Antrieb für die Spanneinrichtung 200 vorsieht, so daß die Spanneinrichtung 200 um ihre Rotationsachse R gedreht wird.

Die im wesentlichen zylindrische Spanneinrichtung 200 selbst besteht bei einem Ausführungsbeispiel aus zwei sich gegenüberliegenden Klemmbacken 201, 202, die im gespannten Zustand das Schneidelement 1 zwischen sich einschließen. Die Klemmspannung wird durch auf dem Umfang der Spanneinrichtung 200 verteilt angeordnete Spannschrauben 208 erreicht, die sowohl die eine Klemmbacke 201 als auch die andere Klemmbacke 202 durchdringen.

Das Schneidelement 1 ist vorzugsweise so positioniert, daß der Schwerpunkt S des Schneidelements 1 auf der Rotationsachse R der Spanneinrichtung 200 liegt.

Auf seiner Oberseite 209 und vorzugsweise auch auf seiner Unterseite 210 weist die Spanneinrichtung 200 jeweils eine trichterförmige Öffnung 211, 212 mit einem Trichtergrund 213 auf, die dem zu bearbeitenden Werkstück 300 den Zugang zum Schneidelement 1 ermöglicht. Diese trichterförmige Öffnung 211, 212 ist so gestaltet, daß im Trichtergrund 213 eine Bohrung vorgesehen ist, die zum einen dem äußeren Profil des Schneidabschnittes 4 des Schneidelements 1 entspricht und zum anderen so dimensioniert ist, daß die während des Bearbeitungsprozesses anfallenden Späne problemlos abgeführt werden können. Weitere zusätzliche Bohrungen im Trichtergrund 213, wie sie Figur 6 dargestellt sind, fördern die Spanabfuhr.

### Sachnummernliste

- 1,1' -: Schneidelement
- 2 -: Klemmabschnitt
- 3 -: Klemmabschnitt
- 4 -: Schneidabschnitt
- 6 -: Fase mit negativen Spanwinkel
- 7 -: negativer Spanwinkel
- 8 -: Ausnehmung
- 9 -: Ausnehmung
- 10 -: Freifläche
- 11 -: positiver Spanwinkel
- 12, 12' -: Spanfläche
- 13 -: Spanfläche
- 14 -: Seitenfläche
- 15 -: Seitenfläche
- 16 -: Hauptschneide
- 17 -: Hauptschneide
- 18 -: Hauptschneide
- 19 -: Hauptschneide
- 20 -: Oberseite
- 21 -: Oberseite
- 22 -: Relativdrehrichtung
- 23 -: Spanbrecher
- 200 -: Spanneinrichtung
- 201 -: Klemmbacke
- 202 -: Klemmbacke
- 203 -: Spannschraube
- 209 -: Oberseite
- 210 -: Unterseite
- 211 -: Öffnung
- 212 -: Öffnung
- 213 -: Trichter
- 300 -: Werkstück/Schweißkappe

## Patentansprüche

1. Verfahren zum Formgebung und/oder zum mechanischen Entfernen von Ablagerungen an Werkstücken (300), insbesondere von Ablagerungen an Schweißelektroden (300) für das Widerstandsschweißen, mit Hilfe einer Vorrichtung aufweisend mindestens ein Schneidelement (1, 1') mit einer Hauptschneide (16, 17, 18, 19), wobei der Hauptschneide (16, 17, 18, 19) mindestens eine Spanfläche (12, 13) und mindestens eine Freifläche (10) zugeordnet sind und die Hauptschneide (16, 17, 18, 19) des Schneidelements (1, 1') jeweils im Bereich der Kante von aneinander angrenzender Spanfläche (12, 13) und Freifläche (10) gebildet ist und Schneidelement (1, 1') und Werkstück (300) eine Relativdrehung (22) zueinander ausführen,
**dadurch gekennzeichnet, daß**
an dem Schneidelement (1, 1') zumindest im Bereich der Kante an der Hauptschneide (16, 17, 18, 19) ein Bereich (6) vorgesehen wird, in dem der Spanwinkel (7) hinsichtlich seiner Zuordnung relativ zum Werkstück (300) negativ ist und Schneidelement (1, 1') und Werkstück (300) sich bei der Formgebung und/oder beim Entfernen der Ablagerungen zueinander mit einer Relativdrehzahl im Bereich zwischen 400 und 1500 Umdrehungen je Minute bewegen.

2. Verfahren gemäß Anspruch 1, **dadurch gekennzeichnet, daß** der Spanwinkel (7) des Schneidelements (1, 1') nur in einem Bereich nahe der Kante an der Hauptschneide (16, 17, 18, 19) negativ gebildet wird.

3. Verfahren gemäß Anspruch 2, **dadurch gekennzeichnet, daß** der negativ gebildete Spanwinkel (7) an der Hauptschneide (16, 17, 18, 19) durch eine Fase (6) mit dem entsprechenden Neigungswinkel gebildet wird.

4. Verfahren gemäß einem der vorstehenden Ansprüche, **dadurch gekennzeichnet, daß** der Spanwinkel (7) des Schneidelements (1, 1') an der Hauptschneide (16, 17, 18, 19) in einem Bereich zwischen 0 und negativ 45° gebildet wird.

5. Verfahren gemäß einem der vorstehenden Ansprüche, **dadurch gekennzeichnet, daß** an den kantennah negativ gebildeten Spanwinkel (7) in Schnittrichtung (22) ein Abschnitt der Spanfläche (12, 13) mit einem mit mehr als 4° positiv ausgebildeten Spanwinkel (11) angrenzt.

6. Verfahren gemäß einem der vorstehenden Ansprüche, **dadurch gekennzeichnet, daß** die Spanfläche (12, 13) des Schneidelements (1, 1') durch eine Fläche einer in mindestens einer Seitenfläche (14, 15) des Schneidelements (1, 1') vorgesehenen, im wesentlichen bogenförmigen Ausnehmung (8, 9) gebildet wird.

7. Verfahren gemäß einem der vorstehenden Ansprüche, **dadurch gekennzeichnet, daß** die Schneide (16, 17, 18, 19) des Schneidelementes (1, 1') nicht exakt scharfkantig, sondern abgerundet oder angefast oder gebrochen ausgebildet wird.

8. Verfahren gemäß Anspruch 7, **dadurch gekennzeichnet, daß** die Schneide (16, 17, 18, 19) des Schneidelementes (1, 1') mit einer kleinen Abrundung oder einer kleinen Fase, vorzugsweise im Bereich von wenigen hundertstel Millimetern gebildet wird.

9. Verfahren gemäß Anspruch 8, **dadurch gekennzeichnet, daß** die Schneide (16, 17, 18, 19) des Schneidelementes (1, 1') durch Polieren abgerundet oder angefast oder gebrochen wird.

10. Verfahren gemäß einem der vorstehenden Ansprüche, **dadurch gekennzeichnet, daß** die Relativdrehzahl zwischen Schneidelement (1, 1') und Werkstück (300) im Bereich zwischen 650 und 1300 Umdrehungen pro Minute beträgt.

11. Verfahren gemäß einem der vorstehenden Ansprüche, **dadurch gekennzeichnet, daß** an der Vorrichtung mehr als ein Schneidelement (1, 1') für die Herstellung unterschiedlicher Abschnitte des Werkstückes (300) vorgesehen wird.

## Claims

1. A method of shaping and/or mechanically removing deposits on workpieces (300), in particular deposits on welding electrodes (300) for resistance welding, by means of a device having at least one cutting element (1, 1') with a main cutting edge (16, 17, 18, 19), wherein at least one rake surface (12, 13) and at least one relief surface (10) are associated with the main cutting edge (16, 17, 18, 19) and the main cutting edge (16, 17, 18, 19) of the cutting element (1, 1') is respectively formed in the region of the edge of mutually adjoining rake surface (12, 13) and relief surface (10) and the cutting element (1, 1') and the workpiece (300) perform a relative rotary movement (22) with respect to each other,
**characterised in that**
provided on the cutting element (1, 1') at least in the region of the edge at the main cutting edge (16, 17, 18, 19) is a region (6) in which the rake angle (7) is negative in respect of its association relative to the workpiece (300) and the cutting element (1, 1') and the workpiece (300) move relative to each other at a relative rotary speed in the range of between 400 and 1500 revolutions per minute in shaping and/or removing the deposits.

2. A method according to claim 1 **characterised in that** the rake angle (7) of the cutting element (1, 1') is formed negative only in a region near the edge at the main cutting edge (16, 17, 18, 19).

3. A method according to claim 2 **characterised in that** the negatively formed rake angle (7) at the main cutting edge (16, 17, 18, 19) is formed by a bevel (6) with the corresponding angle of inclination.

4. A method according to one of the preceding claims **characterised in that** the rake angle (7) of the cutting element (1, 1') at the main cutting edge (16, 17, 18, 19) is formed in a range of between 0 and negative 45°.

5. A method according to one of the preceding claims **characterised in that** a portion of the rake surface (12, 13) with a rake angle (11) formed positively at more than 4° adjoins the rake angle (7) which is formed negatively near the edge in the cutting direction (22).

6. A method according to one of the preceding claims **characterised in that** the rake surface (12, 13) of the cutting element (1, 1') is formed by a surface of a substantially arcuate recess (8, 9) provided in at least one side surface (14, 15) of the cutting element (1, 1').

7. A method according to one of the preceding claims **characterised in that** the cutting edge (16, 17, 18, 19) of the cutting element (1, 1') is not exactly sharp-edged but is of a rounded or bevelled or chamfered configuration.

8. A method according to claim 7 **characterised in that** the cutting edge (16, 17, 18, 19) of the cutting element (1, 1') is formed with a small rounding or a small bevel, preferably in the region of a few hundredths of a millimetre.

9. A method according to claim 8 **characterised in that** the cutting edge (16, 17, 18, 19) of the cutting element (1, 1') is rounded or bevelled or chamfered by polishing.

10. A method according to one of the preceding claims **characterised in that** the relative rotary speed between the cutting element (1, 1') and the workpiece (300) is in the range of between 650 and 1300 revolutions per minute.

11. A method according to one of the preceding claims **characterised in that** provided on the device is more than one cutting element (1, 1') for the production of different portions of the workpiece (300).

## Revendications

1. Procédé pour le reformage et/ou pour l'enlèvement mécanique de dépôts sur des pièces à usiner (300), en particulier de dépôts d'électrodes de soudage (300) pour le soudage par résistance, à l'aide d'un dispositif présentant au moins un élément de coupe (1, 1') avec une lame principale (16, 17, 18, 19), à la lame principale (16, 17, 18, 19) étant associée au moins une face de coupe (12, 13) et au moins une face de dépouille (10) et la lame principale (16, 17, 18, 19) de l'élément de coupe (1, 1') étant formée respectivement dans la zone de l'arête de la face de coupe (12, 13) et de la face de dépouille (10) contiguës et l'élément de coupe (1, 1') et la pièce à usiner (300) réalisant une rotation relative (22) l'un par rapport à l'autre,
**caractérisé en ce que** sur l'élément de coupe (1, 1') au moins dans la zone de l'arête sur la lame principale (16, 17, 18, 19) est prévue une zone (6), dans laquelle l'angle de dégagement (7) est négatif en ce qui concerne son association par rapport à la pièce à usiner (300) et **en ce que** l'élément de coupe (1, 1') et la pièce (300) se déplacent lors du reformage et/ou lors de l'enlèvement des dépôts l'un par rapport à l'autre à une vitesse de rotation relative comprise entre 400 et 1 500 tours par minute.

2. Procédé selon la revendication 1, **caractérisé en ce que** l'angle de dégagement (7) de l'élément de coupe (1, 1') est formé uniquement négativement dans une zone près de l'arête sur la lame principale (16, 17, 18, 19).

3. Procédé selon la revendication 2, **caractérisé en ce que** l'angle de dégagement (7) formé négativement sur la lame principale (16, 17, 18, 19) est formé par un biseau (6) avec l'angle d'inclinaison correspondant.

4. Procédé selon l'une quelconque des revendications précédentes, **caractérisé en ce que** l'angle de dégagement (7) de l'élément de coupe (1, 1') sur la lame principale (16, 17, 18, 19) est formé dans une plage entre 0 et moins 45°.

5. Procédé selon l'une quelconque des revendications précédentes, **caractérisé en ce qu'**une section de la face de coupe (12, 13) avec un angle de dégagement (11) réalisé positivement avec plus de 4° est contiguë à l'angle de dégagement (7) formé négativement près de l'arête dans le sens de coupe (22).

6. Procédé selon l'une quelconque des revendications précédentes, **caractérisé en ce que** la face de coupe (12, 13) de l'élément de coupe (1, 1') est formée par une surface d'un évidement (8, 9) essentiellement arqué, prévu dans au moins une face latérale (14, 15) de l'élément de coupe (1, 1').

7. Procédé selon l'une quelconque des revendications précédentes, **caractérisé en ce que** la lame (16, 17, 18, 19) de l'élément de coupe (1, 1') n'est pas réalisée exactement à arêtes vives, mais arrondie ou biseautée ou brisée.

8. Procédé selon la revendication 7, **caractérisé en ce que** la lame (16, 17, 18, 19) de l'élément de coupe (1, 1') est formée avec un petit arrondi ou un petit biseau de préférence dans la plage de quelques centièmes de millimètres.

9. Procédé selon la revendication 8, **caractérisé en ce que** la lame (16, 17, 18, 19.) de l'élément de coupe (1, 1') est arrondie ou biseautée ou brisée par polissage.

10. Procédé selon l'une quelconque des revendications précédentes, **caractérisé en ce que** la vitesse de rotation relative entre l'élément de coupe (1, 1') et la pièce à usiner (300) est comprise dans la plage entre 650 et 1 300 tours par minute.

11. Procédé selon l'une quelconque des revendications précédentes, **caractérisé en ce que** sur le dispositif est prévu plus d'un élément de coupe (1, 1') pour la fabrication de différentes sections de la pièce à usiner (300).
